# EUROPEAN PATENT SPECIFICATION

(11) **EP 1 842 689 B1**
(45) Date of publication and mention of the grant of the patent: **16.06.2010**
(21) Application number: 07104085.1
(22) Date of filing: 14.03.2007
(51) Int. Cl.: B42D 15/10, B32B 27/08

(54) **Thermally stable proximity indentifaction card**
Thermisch stabile Näherungsidentifikationskarte
Carte d'identification de proximité stable thermale

(30) Priority: 05.04.2006 US 789962 P; 29.01.2007 US 668094
(43) Date of publication of application: 10.10.2007
(73) Proprietor: ASSA ABLOY AB, 107 23 Stockholm (SE)
(72) Inventor: Shvartsman, Felix P., NEW HAVEN, CT 06519 (US)
(74) Representative: Grosfillier, Philippe

(56) References cited:
- EP-A1- 1 640 156
- DE-A1- 19 631 283
- DE-A1- 19 928 522
- DE-A1-102004 008 840

## Description

### FIELD OF THE INVENTION

The present invention is directed toward a thermally stable proximity card. More specifically, methods and systems of producing and materials used to produce such a card are provided herein.

### BACKGROUND

Besides its low cost, one of the reasons polyvinyl chloride (PVC) is used in proximity (contactless) identification plastic cards is its excellent ability to melt and flow under heat and pressure during the card lamination process. This unique property of PVC allows all internal electronic parts of the proximity card, such as various antennas and chips to be hid reasonably well. However, PVC does not offer adequate durability even under the normal use conditions. Often PVC cards fail due to fatigue or plasticizer attack, which causes severe cracking of the cards. In more aggressive use applications, such as proximity ID badges, low structural rigidity durability of PVC cards becomes more apparent. Another deficiency of PVC based proximity cards is that even limited exposure of the cards to heat causes the cards to warp beyond ISO specification due to the stress introduced into the card by the embedded antenna's coil. Introduction of polyethylene terephtalate (PET) films in the laminated plastic cards structure is known to significantly improve a card's dimensional stability, as well as reducing cracking and enhancement of plasticizer resistance.

U.S. Patent 4,343,851 describes a plastic card construction where a core bearing printing and/or a photo is sealed with a multiply layer consisting of an outer protective film made from polymers like polyester, polyamide etc. and an inner uniaxially oriented anisotropic polymer layer made from polymers like polyethylene. Heat sealing is achieved by using adhesives like polyethylene or ethylene acrylic acid. In order to promote adhesion between the polyester film and the polyethylene heat seal layer, a primer of either polyethyleneimine or polyester-polyurethane can be applied to the polyester film before the heat seal layer is formed. A feature of the 851 patent is in the use of the uniaxially oriented film which has a large difference in tensile strength in the direction parallel and perpendicular to the orientation. This film serves as a security feature. Any attempt to delaminate the card will result in a rupture of such film in one direction, which cannot be re-sealed without visual defects.

A polyester credit card construction is described in U.S. Patent 4,522,670. A core consisting of amorphous polyester is covered by thin outer layers of, preferably, biaxially oriented PET. Following embossing, the card is tamper-resistant because the amorphous polyester core crystallizes to retain the memory of the embossed characters. Core and outer layer adhesion can be promoted using adhesives consisting of an acrylic or methacrylic resin, ethylene/vinyl acetate copolymers, water dispersible copolyesters containing free acid groups, or heat sealable coating polymers. This patent does not mention any printing on the core. Polyurethane adhesives are not included in the listing of adhesives

Testing of PET/PVC composite proximity card constructions has shown that these composite card constructions tend to warp beyond ISO Specification standards, i.e., the cards warp/bow beyond 0.84 mm (0.033 inch), where 1 mm is equal to about 0.039 inches, after being subjected to a thermal stability test that comprises 3 hours of continuous heating at 70°C. Another inherited physical-chemical property of PVC and to some extent PET is the material's tendency to shrink upon being subjected to continuous heating. There is a need for a thermally stable composite proximity card that can withstand extended exposure to heat and the elements.

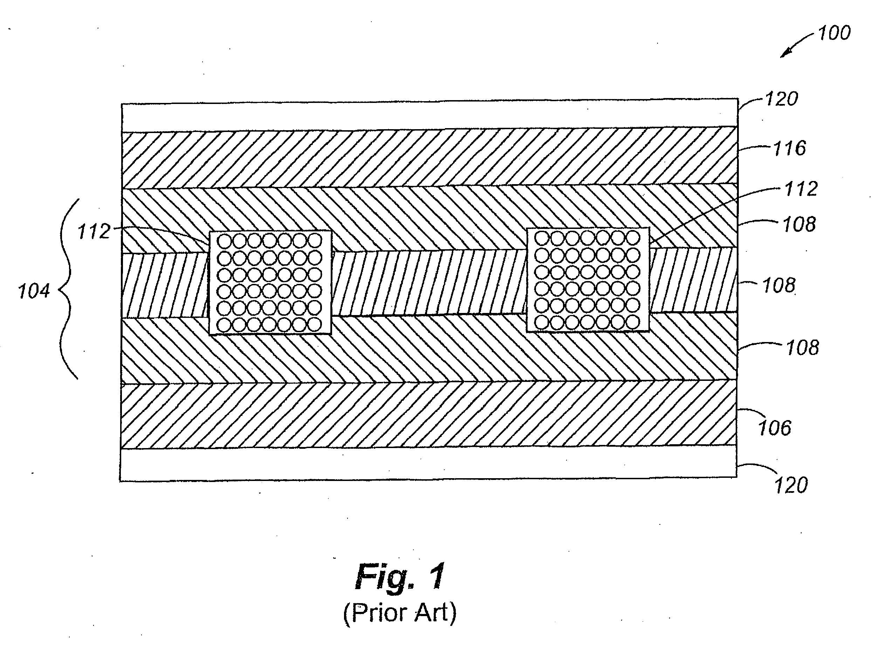

Multilayer card constructions of PET and PVC have been discussed and described in the past. The usefulness of cards made of PET/PVC composites and one hundred percent polyester for identification (ID), financial, and smart cards have been outlined. Composite cards of PET and PVC described in relation to Fig. 1 show cards with PET cores covered with layers of clear vinyl and/or layers of white and clear vinyl. Because the PET is coated with a heat sealable layer, bonding to the vinyl layers is obtained. More specifically, as can be seen in Fig. 1, a multilayer card 100 in accordance with embodiments of the prior art is shown. The multilayer card 100 comprises a prelamination or prelam layer 104 made up of a number of PVC layers 108. In some embodiments, two PVC layers 108 may be used to construct the prelam 104, whereas in other embodiments more PVC layers 108 are used. In the depicted embodiment, there are three PVC layers 108 that comprise the prelam 104. Embedded within the prelam 104 are electronics, antennas, or other elements 112 used in connection with contactless cards. Generally the electronic elements 112 comprise an antenna having a thickness of around 0.28 mm (0.011 inch). The antenna is wrapped in a ring-like fashion (e.g., circular, oval, rectangular, etc.) such that it can be used to produce an electromagnetic field for communication with a contactless card reader. The antenna is generally connected to an integrated circuit (IC) or other type of processing chip that comprises the logic and stores credential data related to either the card or the card holder.

In general, one or more PVC layers 108 of the prelam 104 are cut to have a recess that accepts the electronic components 112. During prelam 104 construction the antenna and other electronic components 112 are inserted into the recessed portions of the PVC layers 108 and an enclosing PVC layer 108 is placed on one or both sides of the electronic components 112 thus fully containing them in the prelam 104. In a first lamination phase, the prelam 104 is subjected to an increased pressure and heat, which results in a lamination of the PVC layers 108. In a second cold lamination phase, the prelam 104 is subject to an increased pressure and a decreased heat that is intended to cure the lamination.

An unfortunate side effect of heating the prelam 104 is that the electronic components 112 are also heated. Specifically, the antenna (which is typically made of a highly conductive metal like copper) is heated along with the PVC layers 108. During second cold lamination phase the prelam 104 cools off only partially. Then after the prelam 104 is removed from the lamination pressure the outside of the PVC layers 108 cool off relatively quickly whereas heat is retained for a longer period of time in the antenna and the inner portions of the PVC layers 108. This difference in cooling times results in a temperature gradient, which ultimately introduces internal stresses and strains to the prelam 104 because of the difference in expansion of the prelam layers. More specifically, since the antenna and other electronic components 112 are at a higher temperature than their surroundings, tensile forces are introduced to the prelam layers. This is typically not a problem because the cards are produced in a sheet of many cards (usually a 7x3 = 21 cards per sheet) that help displace the stresses.

However, the card production process is not done when the prelam 104 construction is completed. After the prelam is completed, additional outer layers are added to the prelam 104 to help create a smooth card surface and/or allow graphics to be added the card. Generally, two PET layers 116 are added to each face of the prelam 104. The PET layers 116 generally include artwork or other designs that enhance the appearance of the completed card 100 for the customer or card user. Then two clear PVC overlay layers 120 are placed over the PET layers 116 to help protect the artwork. The completed card 100 is then subjected to another round of heat and pressure (usually both a hot and cold lamination phase) to bond all layers of the card 100 into a single laminate structure. Similar to the first prelam lamination process, when the final card construction laminated sheet comprising multiple cards is brought out of the second card lamination production process used to bond the two PET layers 116 and two clear PVC overlay layers 120 to the prelam 104, a temperature gradient is created between the inner portions of the card 100 and outer portions of the card because the PVC layers 108 tend to not dissipate heat very quickly from the electrical components 112. This may be a thermal insulation function of such additives like Titanium Dioxide that are added to the white PVC layer 108 to increase its opaque appearance and/or strength. Thus, after the sheet of cards is brought out of the lamination press they are generally placed in a freezer to help cool down the inside layers of the sheet before individual cards are cut out from the sheet. If the cards were cut from the sheet before the insides were frozen for a sufficient amount of time, the internal stresses in the card would cause the card to warp beyond ISO standards relatively quickly, thus rendering the card substantially useless and drastically reducing yield. For this reason, the sheets of cards remain in a freezer for an extended period of time, usually lasting between 6 and 12 hours. Moreover, the sheets of cards are also positioned between flat plates to reduce bowing or warping during the freezing process. This particular freezing step has been accepted by industry as a required step, and the inefficiencies introduced by the cooling step are looked at as unavoidable. Additionally, if cards cut out from a frozen sheet are subjected even to moderate environmental heat changes during normal use, the internal stress is being reintroduced again and the cards eventually warp/bow beyond ISO Specifications. Card production efficiency and cards thermal stability could be greatly increased if one were able to eliminate the freezing step from the card production process as it adds substantial time to the overall process.

Documents DE 196 31 283, DE 199 28 522, DE 10 2004 008 840 and EP 1 640 156 all show laminated data carrying devices comprising several layers.

### SUMMARY

To address these and other needs of the prior art, a new durable and thermally stable composite 125-KHz proximity identification plastic card based on a combination of PVC, PET, and polycarbonate (PC) materials has been developed. Typical PVC-based 125-KHz proximity cards generally fail a 3-hour continuous heating test at 60°C. During these tests, card warpage greatly exceeds a 0.84 mm (0.033 inch) gap between the flat surface and bottom of the arch of bowed card, as it is defined by ISO Specifications. Composite PVC/PET 125-KHz proximity cards with either 25%-PET or 35%-PET content both fail a 3-hour continuous heating test at 70°C. Based on these shortcomings, a goal of the present invention was to develop a thermally stable 125-KHz proximity composite card that can survive at least 3 hours of heating at 90°C. Such resistance to extreme heating is required, for example, for use of contactless cards positioned in the car's windshield for use with road tolls and parking access, for card left inside a car parked outside on a summer day, or for cards carried by personnel working outside, particularly, in tropical climates.

In accordance with one embodiment of the present invention, a rigid and non-shrinkable PC (polycarbonate) polymeric film was used in the multilayer construction of the prelam to overcome the residual stress introduced into the laminated structure by the embedded antenna's coil. Various thicknesses of PC can be used in the prelam composite structures of the present invention to achieve desired thermal stability of the laminated card and to help ensure that the dimensional ISO Specification for laminated card thickness of 0.76 mm +/- 0.076 mm (0.030 +/- 0.003 inch) is satisfied. In one embodiment, the use of 0.25 mm (0.010 inch) thick PC film in the prelam construction produces a thermally stable 125-KHz proximity cards that does not need to be frozen and remains flat after 8 hours of continuous heating at 90°C such a PC film as produced by GE under the Lexan^{®} trademark.

In accordance with one embodiment of the present invention, a laminated data carrying device is provided. The device comprises:
(a) a middle layer comprising polycarbonate having a first surface and a second surface;
(b)a first layer located proximate to the first surface; and
(c) a second layer located proximate to the second surface.

The data carrying device is thermally stable and can withstand exposure to extreme heat and cold for prolonged periods of time, making the device ideal for industrial, commercial, home, and government applications. The polycarbonate helps relieve any temperature gradients that may build up through prolonged exposure by dissipating heat from the inside of the device.

The data carrying device comprising polycarbonate in the prelam construction also dissipates heat more effectively from the electronic components within the device during the lamination process and subsequently in normal use. By dissipating heat from the electronic components of the device, it is believed that normal stresses resulting from the existence of a heat gradient created during the lamination process are minimized and/or eliminated thus making the card production process more efficient and the card less likely to warp beyond ISO standards either soon after the lamination process or in normal use.

In accordance with one embodiment of the present invention, the data carrying device may comprise a 3-Layer prelam where at least one layer of the prelam includes polycarbonate. In another embodiment, the data carrying device may comprise a 5-Layer prelam. Two or more layers of the 5-Layer prelam may include polycarbonate further increasing the rigidity of the prelam as compared to the 3-Layer prelam. In one embodiment, the 5-Layer prelam may comprise three layers having polycarbonate. The inner most layer and the two outermost layers of the prelam may be constructed with polycarbonate to help thermal dissipation during the lamination process.

Another aspect of the present invention is to eliminate the freezing step for the laminated sheets and thereby decrease manufacturing time. The freezing step can last up to 12 hours, which greatly reduces the efficiency of the card manufacturing process. In accordance with one embodiment, a sheet of proximity composite cards is manufactured such that heat is dissipated relatively quickly from the inside of a sheet of prelams to the outside of the sheet immediately following hot and cold lamination. Thus, the presence of a substantial heat gradient is avoided after the sheet of prelams is removed from a lamination press. In addition, after the second lamination that produces a sheet of cards, each card can be cut from the sheet without concern for the warping of the card due to internal stresses. The prelam of the composite card is designed to dissipate heat from the electrical components of the card, and therefore the freezing step may be removed from the production process. This affords the card manufacturer an ability to cut the cards from the complete sheet of cards soon after the sheet has been removed from the second lamination press.

In another embodiment of the present invention, the freezing step is removed from a card manufacturing process that includes only one hot lamination step. In this particular embodiment, all layers including the prelam layers and outer layers of the proximity composite card are placed in a single lamination press. The lamination press subjects the layers of the card to a predetermined pressure and temperature for a predetermined amount of time to help create a bond between each of the adjacent layers in the card. As can be appreciated by one of skill in the art, the lamination press generally subjects the card to an increased temperature and pressure in a first hot press phase. In a second cold press phase, the card is still subjected to an increased pressure but a decreased temperature. Both phases of lamination may be performed in the same press or may be performed by different presses depending upon the types of equipment available to the card manufacturer.

Similar to the two-stage lamination process, when the sheet of cards has been through both phases of lamination and is removed from the lamination press, the inner layers of the card actively dissipate heat from the electronic components stored within the middle of the card such that a substantial heat gradient is either not realized or quickly relieved. The elimination of the freezing process greatly increases the efficiency of the overall card manufacturing process, which in turn helps increase card production productivity and profitability.

In accordance with another embodiment of the present invention, a method of producing a laminated data carrying device is provided. The method comprises the steps of:
(a) laminating layers of a sheet together by subjecting the sheet to a predetermined increased temperature and pressure;
(b) removing the sheet from the increased pressure and temperature;
(c) shortly after removing the sheet from the pressure and temperature, cutting out at least one portion of the sheet into a card.

This particular method has the benefit of not including a freezing step as most methods of the prior art require. Rather, the sheet may be removed from the lamination conditions and have the cards cut therefrom without having to seriously worry about having the cards warp due to internal stresses.

These and other advantages will be apparent from the disclosure of the invention(s) contained herein. The above-described embodiments and configurations are neither complete nor exhaustive. As will be appreciated, other embodiments of the invention are possible using, alone or in combination, one or more of the features set forth above or described in detail below.

The invention is as defined in the claims.

### BRIEF DESCRIPTION OF THE DRAWINGS

Fig. 1 depicts a cross-sectional view of a data carrying device in accordance with embodiments of the prior art;
Fig. 2 depicts a cross-sectional view of a data carrying device having a three layered prelam in accordance with embodiments of the present invention;
Fig. 3 depicts a cross-sectional view of a data carrying device having a five layered prelam in accordance with embodiments of the present invention; and
Fig. 4 depicts a method of producing a data carrying device in accordance with embodiments of the present invention.

### DETAILED DESCRIPTION

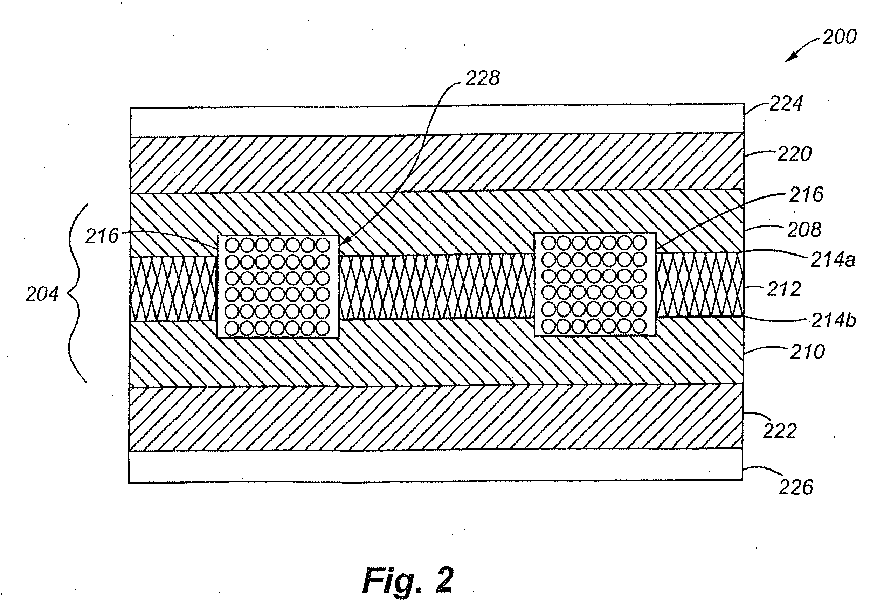

Fig. 2 illustrates the cross-section of an exemplary construction for laminated proximity card 200 comprising a 3-Layer composite prelam in accordance with at least some embodiments of the present invention. It should be noted that the cross-sectional view does not depict the chip position although it will be understood by one of skill in the art that the existence of such a chip in the card is possible and most times desirable. The proximity card 200 generally comprises a prelam 204 having two PVC layers 208, 210 surrounding a PC layer 212. A first surface of the PC layer 212a is in contact with the first PVC layer 208 while the second surface of the PC layer 212b is in contact with the second PVC layer 210. The PC layer 212 is a generally rigid, non-shrinkable, amorphous layer that helps dissipate heat generated during a hot lamination phase contained by the electronic components 216 within the prelam 204. The molecular structure of the PC layer 212 is such that it can dissipate heat relatively easily as compared to PVC layers 208,210.

The proximity card 200 may further comprise one or more PET layers 220, 222. The PET layers 220, 222 generally contain artwork or other designs that help enhance or customize the appearance of the proximity card 200. Pictures and other graphic art may be included on one or both PET layers 220, 222 to help identify an intended holder of the card 200. The graphics on the PET layers 220, 222 may further identify the maker of the card 200 and a company to which the card 200 was sold.

As a protective measure for the design on the PET layers 220, 222, one or more overlay layers 224, 226 may be provided. The overlay layers 224, 226 are generally clear, thus allowing one to view graphics on the PET layers 220, 222. In one embodiment, the overlay layers 224, 226 comprise a clear PVC material.

As an example, the total thickness of the card 200 can be between about 0.68 mm (0.027 inch) and about 0.84 mm (0.033 inch). The thickness of the card 200 can generally be made such that the card 200 is in compliance with industry standards governing card thicknesses at 0.76 mm +/- 0.076 mm (0.030 +/- 0.003 inch). To this end the thicknesses of different layers in the card 200 may vary depending upon the application and desired cost. In one embodiment, the thickness of the PC layer 212, PVC layers 208, 210, and PET layers 220, 222 are substantially the same. For instance, the thicknesses of each layer may be about 0.15 mm (0.006 inch), while the thickness of the overlay layers 224, 226 are between about 0.025 mm (0.001 inch) and about 0.05 mm (0.002 inch). This may result in a maximum card thickness of about 0.84 mm (0.033 inch) if a pair of 0.05 mm (0.002 inch) overlay layers 224, 226 are used along with five layers of 0.15 mm (0.006 inch) thickness.

In accordance with another embodiment of the present invention, the thickness of the PC layer 212 may not necessarily be the same as that of the PVC layers 208, 210. For example, the thickness of the PC layer 212 may be about 0.25 mm (0.010 inch) thick and the thicknesses of the PVC layers 208, 210 may be about 0.10 mm (0.004 inch). This results in a prelam 204 thickness of about 0.45 mm (0.018 inch). As can be appreciated by one of skill in the art, the final thickness of the prelam 204 may range between about 0.45 mm (0.018 inch) and about 0.53 mm (0.021 inch). Likewise, the thickness of the PC layer 212 can range between about 0.13 mm (0.005 inch) and about 0.39 mm (0.015 inch), with a preferred thickness being about 0.25 mm (0.010 inch). Of course, other thicknesses are possible, based upon the desired application and thicknesses of materials available.

The thickness of the electronic components 216 is generally about 0.28 mm (0.011 inch) and, as can be seen in Fig. 2, the thickness of the electronic components 216 may be larger than the thickness of the PC layer 212. In other embodiments, the PC layer 212 may be thicker than the electronic components 216. It is generally preferable to have the thickness of the PC layer 212 be close to the thickness of the electronic components 216. This allows the PC layer 212 to dissipate heat stored in the electronic components 216 away from the electronic components 216 to the edges of the PC layer 212 and/or the PVC layers 208, 210. It is believed if the PC layer 212 is constructed such that it can generally maintain an even temperature gradient (*e.g*., between about +/- 5 degrees Celsius between adjacent layers in the card 200 between the inside and outside of the card 200, minimal stresses will be introduced to the card 200 even through prolonged exposure to heat and/or pressure.

As can be appreciated by one of skill in the art, PC is not the only type of material that is suitable for use in the middle layer 212. Instead, other substantially thermal conductive materials may be used to construct the prelam 204. For example, polymers having a relatively uniform molecular structure that allows the dissipation of heat may be used. For example, various types of Lexan® resins may be used for construction of the middle layer 212. The inclusion of additives as a part of the middle layer 212 is generally not desirable, as they may tend to decrease the thermal conductivity.

Prelams used in the construction of 125-KHz proximity card usually consist of 2 or 3 White-PVC layers of various thicknesses. Prelams with a 2-Layer construction generally have an antenna plus chip module robotically attached to one of the layers by ultrasonic welding or the like. In the context of a 3 layer prelam, the middle layer 212 is die cut in a shape to receive the preformed antenna and connected chip. One of the PVC layers 208, 210 is attached by ultrasonic welding to the die-cut middle layer and the antenna plus chip modules are placed into the die-cut openings. The other PVC layer 208, 210 is added and tacked to the other side of the middle layer 212 to maintain the relative position of the layers and electronic components prior to hot lamination.

As can be seen in Fig. 2, the introduction of a relatively rigid and substantially non-shrinkable amorphous (non-axially-oriented) PC polymeric film as the middle layer 212 in the redesigned 3-Layer prelam construction creates a thermally efficient and relatively heat resistant 125-KHz proximity card. It also eliminates the freezing step in card manufacturing process allowing significantly improved productivity, as will be discussed below in greater detail. In accordance with one embodiment of the present invention, 125-KHz proximity cards based on a 3-Layer prelam construction can sustain at least about 8 hours of continuous heating at 90°C and still remain flat within ISO Specifications.

In the new PC/PVC composite prelam the PC layer 212 can be transparent, white and or any other color depending on the card design and economics. The inner side of PVC layers 208, 210 adjacent to the PC layer 212 may be coated, if needed, with an adhesive to ensure a proper bond between PVC and PC layers. Any commonly used polyurethane based adhesives may be employed. Assembling of the PC/PVC composite prelams, as well as its lamination, and subsequent collation of the additional card layers followed by card lamination step are unchanged in comparison to the old and conventional methods. However, in comparison to methods used in the past, embodiments of the present invention afford for card construction methods that do not require a freeze step before cards are cut from a laminated sheet.

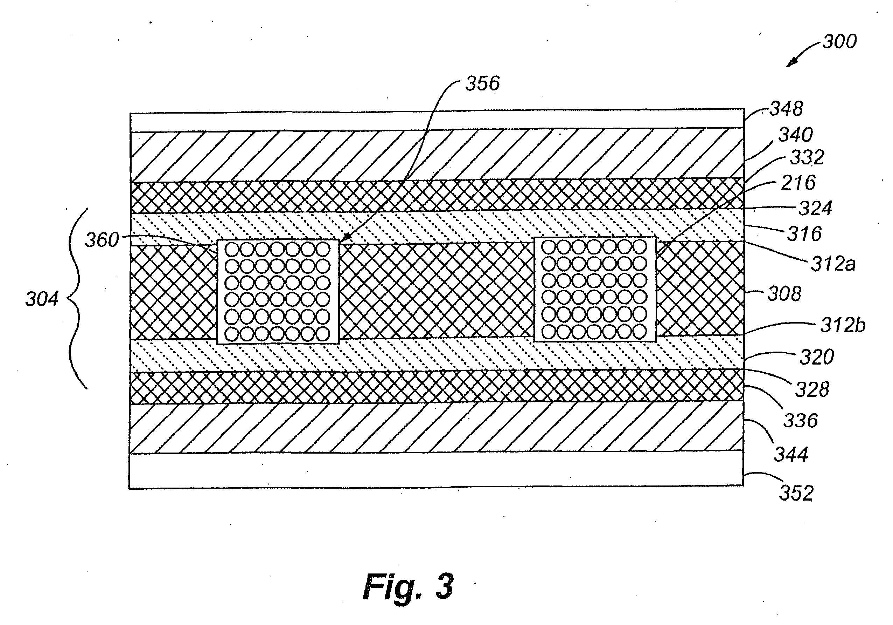

Fig. 3 depicts a cross-section of an exemplary construction for laminated proximity card 300 comprising a 5-Layer composite prelam 304 in accordance with at least some embodiments of the present invention. Similar to Fig. 2, the cross-sectional view does not depict the chip position although it will be understood by one of skill in the art that the existence of such a chip in the card is possible and most times desirable. The proximity card 300 generally comprises a 5 -Layer prelam 304 having an inner PC layer 308 adjacent to two PVC layers 316, 320. A first surface 312a of the inner PC layer 308 is in contact with the first PVC layer 316 while a second surface 312b of the inner PC layer 308 is in contact with the second PVC layer 320. The inner PC layer 308 may be similar to the PC layer 212 of the 3-Layer prelam 204 in that the inner PC layer 308 is a generally rigid, non-shrinkable, amorphous layer that helps dissipate heat generated during a hot lamination phase contained by the electronic components 360 within the prelam 304. The molecular structure of the inner PC layer 308 is such that it can dissipate heat relatively easily as compared to PVC layers 316, 320.

The first PVC layer 316 comprises a second surface 324 opposite to the first surface 312a of the inner PC layer 308. The second surface 324 of the first PVC layer 316 is abutted next to a first outer PC layer 332.

The second PVC layer 320 also comprises a second surface 328 opposite to the second surface 312b of the inner PC layer 308. The second surface 328 of the second PVC layer 320 is abutted next to a second outer PC layer 336.

Both outer PC layers 332, 336 provide additional structural support to the prelam 304, which helps reduce the amount by which the card 300 will warp under extreme environmental conditions.

In accordance with at least some embodiments of the present invention, the prelam 304 construction comprises five layers to increase the rigidity of the prelam 304 and therefore the rigidity of the card 300. The relative thicknesses of the layers within the prelam may vary depending upon the application and intended end use of the card 300. For instance, the inner PC layer 308 may comprise a thickness substantially greater than the thicknesses of any other layer within the prelam 304. Alternatively, the thickness of the inner PC layer 308 may be comparable to the thicknesses of the outer PC layers 332, 336. In accordance with one embodiment of the present invention, the inner PC layer 308 comprises a thickness of about 0.18 mm (0.007 inches), each PVC layer 316, 320 comprises a thickness of about 0.13 mm (0.005 inches), and each outer PC layer 332, 336 comprises a thickness of about 0.076 mm (0.003 inches). Accordingly, the total thickness of the prelam 304 may be about 0.58 mm (0.023 inches). Of course, the thickness of the prelam 304 may be larger or smaller depending upon user requirements.

Similar to the proximity card 200 with a 3-Layer prelam 203, the proximity card 300 may further comprise one or more PET layers 340, 344. The PET layers 340, 344 generally contain artwork or other designs that help enhance or customize the appearance of the proximity card 300. Pictures and other graphic art may be included on one or both PET layers 340, 344 to help identify an intended holder of the card 300. The graphics on the PET layers 340, 344 may further identify the maker of the card 300 and a company to which the card 300 was sold.

As a protective measure for the design on the PET layers 340, 344, one or more overlay layers 348, 352 may be provided. The overlay layers 348, 352 are generally clear, thus allowing one to view graphics on the PET layers 340, 344. In one embodiment, the overlay layers 348, 352 comprise a clear PVC material.

As an example, the total thickness of the card 300 can be between about 0.68 mm (0.027 inch) and about 0.9 mm (0.035 inch). Thicker cards 300 may be intended for use in industrial applications where the amount of wear endured by a card 300 is greater as compared to other applications. In one embodiment, the thickness of the card 300 may be in compliance with industry standards governing card thicknesses at 0.76 mm +/- 0.076 mm (0.030 +/- 0.003 inch). To this end, the thicknesses of different layers in the card 300 may vary depending upon the application and desired cost

The thickness of the electronic components 360 is generally about 0.28 mm (0.011 inch) and, as can be seen in Fig. 3, the thickness of the electronic components 360 may be larger than the thickness of the inner PC layer 308. In other embodiments, the inner PC layer 308 may be thicker than the electronic components 360. It may be preferable to have the thickness of the inner PC layer 308 be close to the thickness of the electronic components 360. This allows the inner PC layer 308 to dissipate heat stored in the electronic components 360 away from the electronic components 360 to the edges of the inner PC layer 308 throughout the rest of the prelam 304. However, if a thicker inner PC layer 308 is employed, then the outer PC layers 332, 336 may need to be thinner in order to maintain a given card 300 thickness. The advantages of having a thicker inner PC layer 308 should be weighed against the advantages of having thicker outer PC layers 332, 336. For example, if the outer PC layers 332, 336 are relatively thicker, then the structural rigidity of the card 300 may be increased. Furthermore, if thicker outer PC layers 332, 336 are employed heat dissipation may become more efficient than if thinner PC layers 332, 336 were used.

As can be appreciated by one of skill in the art, PC is not the only type of material that is suitable for use in the PC layers 308, 332, 336. Instead, other substantially thermal conductive materials may be used to construct the prelam 304. For example, polymers having a relatively uniform molecular structure that allows the dissipation of heat may be used. For example, various types of Lexan® resins may be used for construction of the inner 308 and outer layers 332, 336.

With respect to the construction of a 5-Layer prelam, the inner PC layer 308 is die cut in a shape to receive the preformed antenna and connected chip. One of the PVC layers 316, 320 may be attached by ultrasonic welding to the die-cut middle layer and the antenna plus chip modules are placed into the die-cut openings. The other PVC layer 316, 320 is then added and tacked to the other side of the inner PC layer 308 to maintain the relative position of the layers and electronic components prior to hot lamination. Thereafter, the outer PC layers 332, 336 are tacked to the outer sides of each PVC layer 316,320. In accordance with one embodiment of the present invention, 125-KHz proximity cards based on a 5-Layer prelam construction can sustain 90°C continuous heating for greater times than the 3-Layer prelam. This means that the 5-Layer prelam card 300 may be able to withstand the continuous heating for at least about 10 hours and still remain flat within ISO Specifications. Of course, if thicker PC layers are utilized then the time may be increased

### Experimental Results

Test results from a study for a wide temperature range of heat exposure for conventional (frozen/clamped) production 125-KHz Proximity Cards is shown below. The following cards samples have been subject to heat exposures test:
#1 - PVC Card/type-H with 0.05 mm (0.002 inch) Clear-PVC Overlay
#2 - PVC Card/type-L with 0.05 mm (0.002 inch) Clear-PVC Overlay)
#3 - PVC Card/type-D; all White-PVC card
#4 - PVC Card/type-K with 0.05 mm (0.002 inch) Clear-PVC Overlay)
#5 - PVC/PET Composite Card with 25% content of White-PET/0.10 mm (0.004 inch)
#6 - PVC/PET Composite Card with 35% content of White-PET/0.15 mm (0.006 inch)

For each of the 6 card types, 5 card samples have been subjected to continuous 3-hours heating in the Thermatron's Climate Control Chamber at the following temperatures:
50°C - for ISO-7810/10373 compliance
60°C - for ANSI/INCITS 322-2002 compliance
70°C - internally specified operating temperature
80°C - test for extreme heat operating temperature

Following are the test results:
- all cards survived 50°C and remained flat as it is specified in ISO-7810 Specifications, *i.e.,* less than 0.84 mm (0.033 inch) warp/bow,
- at 60°C Cards #1, #2, and #4 bowed and warped above ISO-7810 Specifications,
- at 70°C only Card #3 was in compliance with ISO-7810 Specifications flatness,
- at 80°C all cards bowed and warped above ISO-7810 Specifications, although #6 showed the least distortion among all 6 cards not having a PC middle layer 212

Since Card #6 was the most thermally stable card of those tested without a PC layer 212, 308, 332, 336, it was subjected along with the a non-frozen PET/PVC composite 125-KHz proximity cards based on PC/PVC composite 3-Layer prelam construction of the present invention to 8 hours of continuous heating at 90°C. After 3 hours of continuous heating Card #6 was warped beyond ISO Specifications. The non-frozen PET/PVC composite 125-KHz proximity cards based on PC/PVC composite 3-Layer prelam construction sustained 8 hours of continuous heating at 90°C and remained flat within ISO Specifications, i.e., has a warp/bow less than about 0.84 mm (0.033 inch).

One feature of the present invention is the PC/PVC composite prelam 204, 304 construction is built with a PC polymeric film that is a rigid, non-shrinkable, and amorphous material, in accordance with one embodiment of the present invention. Such rigid construction of the prelam significantly improves thermal stability of the laminated proximity card 200, 300.

One advantage offered by at least some embodiments of the present invention is that the manufacture of a very durable and thermally stable 125-KHz proximity card is possible. Customers in the most demanding secure access applications, such as extreme heat environments, can successfully use such cards. Another advantage of such a thermally stable proximity card, which remains substantially flat for its defined service life, is that it should provide a more dimensionally stable platform needed for contact plus contactless combination technology cards, where an external smart card chip is embedded into contactless card. As an example, most government secure access applications use these combination technology cards and require a thermally stable proximity card. The incorporation of one or more PC layers into a card helps to realize these needs.

An additional advantage of such rigid card construction is that it allows elimination of the freezing step in card production process, and subsequently increases productivity and operational economics.

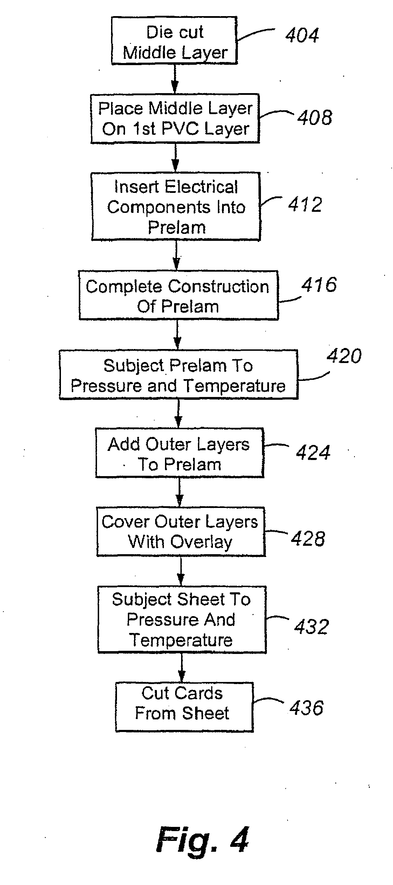

Referring now to Fig. 4, a method of producing a proximity card will be described in accordance with at least some embodiments of the present invention. Generally, a number of cards 200, 300 are produced simultaneously from a sheet or the like. Usually a sheet of cards contains twenty-one individual cards therein. The process described herein may be implemented on either a sheet of cards or a single card depending upon the types of production facilities available. However, it is often desirable to produce multiple cards on a single sheet to help decrease the cost of production per card.

The method begins with a portion of the middle layer 228, 356 may be removed to make room for the electrical components 216, 360 (step 404). In other words the middle layer 228, 356 is die cut to receive a preformed antenna and other electrical components prior to being placed on or near a PVC layer 208, 210, 316, 320. Thereafter, the precut middle layer 212, 308 is brought into contact with the first PVC layer 208, 316 or 210, 320 (step 408). There may be an adhesive or the like present between the abutting surfaces of the middle layer 212, 308 and the PVC layer 208, 306. With the die cut middle layer 212, 308 resting on one of the PVC layers 208, 210, 316, 320 , the electrical components 216, 360 are inserted into the removed portions of the middle layer 228, 356 (step 412). The components may be inserted into the prelam via an automated mechanism like a robot, or may be placed in the recess by a person. With the electrical components 216, 356 in place, the construction of the prelam is completed for a 3-Layer prelam by placing the second PVC layer 208, 210 over the opposite side of the middle layer 212 (step 416). This prelam 204 completion step may include placing a second PVC layer 208, 210 over the middle layer 212 thus concealing the electrical components 216 held therein or preventing them from falling out. Of course, if a 5-Layer prelam is being constructed, then step 416 comprises the addition of the outer PC layers 332, 336 to the PVC layers 316, 320. Adhesives or the like may be employed to temporarily connect the PC layers 332, 336 to the PVC layers 316, 320 prior to lamination.

Once the prelam 204, 304 has been constructed, the prelam 204, 304 is subjected to an increased temperature and pressure (step 420). In one embodiment, the prelam 204, 304 is placed in a lamination press where the layers 208, 210, 212 or 308, 316, 320, 332, 336 are heated and pressed such that they begin to flow and bond. In an alternative embodiment, the heat is just enough that it activates the adhesive between layers 208, 210, 212 or 308, 316, 320. This particular lamination step may be performed according to known lamination techniques and using known lamination devices. A cold lamination cycle typically follows the hot lamination cycle where the prelam 204, 304 is subjected to a greater than atmospheric pressure but a decreased temperature relative to the previously increased temperature. The same lamination machine that performed the hot lamination cycle may perform the cold lamination cycle. Alternatively, one machine may be used to perform the hot lamination cycle and a second machine may be used to perform the cold lamination cycle. Of course, the prelam 204, 304 does not necessarily need to be subjected to the cold lamination cycle as a part of the lamination process.

When the prelam 204, 304 lamination is complete, additional outer layers 220, 222, 340, 344 are added to the outside of the prelam 204, 304 (step 424). The outer layers 220, 222, 340, 344 may comprise a PET material having graphic designs on their outer surface. The other surface contacting the prelam 204, 304 may be treated with an adhesive that helps secure the connection between the outer layer 220, 222, 340, 344 and the prelam 204, 304.

It should be noted that step 424 may be performed prior to step 420 in accordance with at least one embodiment of the present invention. Specifically, all layers of the card 200, 300 may be brought together and laminated all at once. The layers may all be simultaneously subjected to increased pressure and temperature in a hot lamination cycle then subject to an increased pressure at a decreased temperature in a cold lamination cycle. It should be noted that the hot and cold cycles may be performed by the same machine or by different machines.

The outer layers 220, 222, 340, 344 may further be covered with a clear overlay 224, 226, 348, 352 for protection (step 428). This particular step may be eliminated for industrial application cards that may require a thicker PET layer 220, 222, 340, 344. However, the overlay 224, 226, 348, 352 is generally added to preserve any designs on the PET layer 220, 222, 340, 344. Again, and adhesive may be placed between the abutting surfaces of the overlay 224, 226, 348, 352 and PET layers 220, 222, 340, 344. As can be appreciated by one of skill in the art, a greater or lesser number of layers may be used to create a sheet of cards or a single card depending upon the desired properties of the card 200, 300.

Once all of the desired layers are in place on and/or around the prelam 204, 304, the sheet of cards or card 200, 300 is subjected to another hot lamination cycle of increased temperature and pressure for a predetermined amount of time (step 432). The increase in pressure and temperature may vary depending upon a number of factors including, without limitation, sheet composition, the number of sheets in the lamination press, and the like. The lamination of the layers helps complete bonds between the layers, thus improving the performance of the end card. The hot lamination cycle is then followed by a cold lamination cycle.

As noted above, every time the sheet, card, or prelam 204, 304 is subjected to heat, the internal components (*i.e*., the electrical components 216, 256) heat up as well. The heat is used to help initiate a flow of the plastic layers, or at least the adhesive therebetween, to complete a bond between the layers. In the past, when the sheet, card, or prelam 104 was removed from the lamination press the outside of the structure cooled relatively quickly as compared to the inside of the component. This typically resulted in the creation of a temperature gradient through the card/sheet that ultimately created stresses within the sheet/card. Most often, sheets were subjected to this lamination process because most cards subjected to this process tended to warp. The increase surface area of the sheet helped to maintain the flatness of the card until the temperature gradient was reduced or eliminated.

To decrease the temperature gradient, the sheet was generally placed in a freezer for a period of time lasting between about 6 and 12 hours. After that time, the temperature gradient had been relieved along with internal stresses. At this point it was finally okay to cut the cards from the sheet. However, waiting for 6 to 12 hours present a bottleneck to the card manufacturing process. No matter how fast any other portion of the process becomes, the freezing process still had to last for many hours.

However, in accordance with at least some embodiments of the present invention, after the sheet has been subjected to the lamination process, the PC layer 212, 308, 332, 336 begins dissipating heat from the inside of the sheet while the outside of the sheet is also cooling. This helps the sheet cool more uniformly and thus reduces the occurrence of temperature gradients in the sheet. To this end, shortly after the sheet is removed from the lamination press, the cards can be cut from the sheet without having the sheet undergo the freezing process. This presents a time savings in the card production process of up to 12 hours or more depending upon how long a freezing process previously lasted. As can be appreciated, the sheet may be subjected to a limited cooling and/or freezing process but it does not need to be subjected to an extended freezing process as was customary in the prior art.

While the above-described flowchart has been discussed in relation to a particular sequence of events, it should be appreciated that changes to this sequence can occur without materially effecting the operation of the invention. Additionally, the exact sequence of events need not occur as set forth in the exemplary embodiments. The exemplary techniques illustrated herein are not limited to the specifically illustrated embodiments but can also be utilized with the other exemplary embodiments and each described feature is individually and separately claimable.

The present invention, in various embodiments, includes components, methods, processes, systems and/or apparatus substantially as depicted and described herein, including various embodiments, subcombinations, and subsets thereof Those of skill in the art will understand how to make and use the present invention after understanding the present disclosure. The present invention, in various embodiments, includes providing devices and processes in the absence of items not depicted and/or described herein or in various embodiments hereof, including in the absence of such items as may have been used in previous devices or processes, e.g., for improving performance, achieving ease and\or reducing cost of implementation.

The foregoing discussion of the invention has been presented for purposes of illustration and description. The foregoing is not intended to limit the invention to the form or forms disclosed herein. In the foregoing Detailed Description for example, various features of the invention are grouped together in one or more embodiments for the purpose of streamlining the disclosure. This method of disclosure is not to be interpreted as reflecting an intention that the claimed invention requires more features than are expressly recited in each claim. Rather, as the following claims reflect, inventive aspects lie in less than all features of a single foregoing disclosed embodiment. Thus, the following claims are hereby incorporated into this Detailed Description, with each claim standing on its own as a separate preferred embodiment of the invention.

Moreover though the description of the invention has included description of one or more embodiments and certain variations and modifications, other variations and modifications are within the scope of the invention, e.g., as may be within the skill and knowledge of those in the art, after understanding the present disclosure.

## Claims

1. A laminated data carrying device (200, 300), comprising:
a prelam including first (208, 316), second (212, 308), and third (210, 320) layers;
**characterized in that** the second layer comprises polycarbonate and has a first surface (214a, 312a) and a second surface (214b, 312b);
the first layer comprises polyvinyl chloride and is adjacent to the first surface of the second layer; and
the third layer comprises polyvinyl chloride and is adjacent to the second surface of the second layer such that the second layer is disposed between the first and third layers.

2. The device of claim 1, **characterized in that** electronic components 216 are embedded in at least the second layer.

3. The device of claim 1, **characterized in that** the electronic components are embedded in the first, second, and third layers.

4. The device of claim 2, **characterized in that** the second layer is die cut to receive the at least one of an antenna and chip.

5. The device of claim 1, **characterized in that** at least the first layer, second layer, and third layer are subjected to heat, and wherein the second layer substantially dissipates the heat such that a heat difference of less than about 5 degrees Celsius is realized between the second layer and the adjacent first and third layers.

6. The device of claim 5, **characterized in that** at least the first layer, second layer, and third layer are subjected to heat of about 90 degrees Celsius for at least 3 hours, and wherein the first layer, second layer, and third layer warp to a distance less than about 0.84 mm (0.033 inch).

7. The device of claim 1, **characterized in that** a thickness of the second layer is between about 0.13 mm (0.005 inch) and about 0.39 mm (0.015 inch).

8. The device of claim 1, **characterized in that** a thickness of the second layer is about 0.25 mm (0.010 inch).

9. The device of claim 1, **characterized in that** the thickness of the first layer, second layer, and third layer is collectively between about 0.45 mm (0.018 inch) and about 0.53 mm (0.021 inch).

10. The device of claim 1, **characterized in that** the first layer comprises an inner surface that is adjacent to the first surface of the second layer and an outer surface, and wherein the third layer comprises an inner surface that is adjacent to the second surface of the second layer and an outer surface, the device further comprising:
a first outer layer (220, 332) located proximate to the outer surface of the first layer; and
a second outer layer (222, 336) located proximate to the outer surface of the third layer.

11. The device of claim 10, **characterized in that** the thickness of the first layer, second layer, third layer, first outer layer, and second outer layer is collectively between about 0.68 mm and about 0.84 mm.

12. The device of claim 10, **characterized in that** at least one of the first and second outer layer comprise at least one of polyvinyl chloride and polyethylene terephtalate.

13. The device of claim 10, **characterized in that** at least one of the first and second outer layer comprise polycarbonate.

14. The device of claim 1, further comprising an antenna and chip (216, 360) for communicating with an RFID device.

15. The device of claim 14, **characterized in that** the chip and antenna enable communications at a frequency of about 125 kHz.

16. The device of claim 1, **characterized in that** the second layer comprises multiple layers, at least a portion of which comprise polycarbonate.

17. A method of manufacturing a prelam of at least one data carrying device (200, 300), the method **characterized by**:
a) placing a first layer (208, 316) comprising polyvinyl chloride next to a first side of a second layer (212, 308) comprising polycarbonate; and
b) placing a third layer (210, 320) comprising polyvinyl chloride next to a second side of the second layer.

18. The method of claim 17, further **characterized by**:
c) subjecting at least the first, second, and third layers to a predetermined pressure and temperature for a predetermined amount of time.

19. The method of claim 17, further **characterized by**, prior to step a):
c) cutting out at least a portion of the second layer to accommodate at least one of an antenna and chip (216, 360);
d) placing the at least one of an antenna and chip in the cut out portion of the second layer; and
e) covering the at least one of an antenna and chip with at least one of the first and third layer.

20. The method of claim 17, **characterized in that** the second layer comprises a thickness of between about 0.13 mm (0.005 inch) and about 0.39 mm (0.015 inch).

21. The method of claim 17, **characterized in that** a thickness of the second layer is about 0.25 mm (0.010 inch).

22. The method of claim 17, further **characterized by**:
c) placing a first outer layer (220, 332) proximate to the first layer;
d) placing a second outer layer (222, 336) proximate to the third layer; and
e) uniting the first, second, third, first outer, and second outer layers together by subjecting them to heat for a predetermined amount of time.

23. The method of claim 22, **characterized in that** the first and second outer layers comprise polycarbonate.

## Patentansprüche

1. Laminierte datentragende Einrichtung (200, 300), umfassend:
ein Prelam mit einer ersten (208, 316), einer zweiten (212, 308) und einer dritten (210, 320) Schicht;
**dadurch gekennzeichnet, dass** die zweite Schicht Polycarbonat umfasst und eine erste Oberfläche (214a, 312a) und eine zweite Oberfläche (214b, 312b) aufweist;
wobei die erste Schicht Polyvinylchlorid umfasst und sich neben der ersten Oberfläche der zweiten Schicht befindet und
die dritte Schicht Polyvinylchlorid umfasst und sich neben der zweiten Oberfläche der zweiten Schicht derart befindet, dass die zweite Schicht zwischen der ersten und dritten Schicht angeordnet ist.

2. Einrichtung nach Anspruch 1, **dadurch gekennzeichnet, dass** Elektronikkomponenten 216 in mindestens die zweite Schicht eingebettet sind.

3. Einrichtung nach Anspruch 1, **dadurch gekennzeichnet, dass** die Elektronikkomponenten in die erste, zweite und dritte Schicht eingebettet sind.

4. Einrichtung nach Anspruch 2, **dadurch gekennzeichnet, dass** die zweite Schicht vorgestanzt ist, um die eine Antenne und/oder den einen Chip aufzunehmen.

5. Einrichtung nach Anspruch 1, **dadurch gekennzeichnet, dass** mindestens die erste Schicht, die zweite Schicht und die dritte Schicht Wärme ausgesetzt werden, und wobei die zweite Schicht die Wärme im Wesentlichen derart ableitet, dass zwischen der zweiten Schicht und der benachbarten ersten und dritten Schicht eine Wärmedifferenz von weniger als 5 Grad Celsius realisiert wird.

6. Einrichtung nach Anspruch 5, **dadurch gekennzeichnet, dass** mindestens die erste Schicht, die zweite Schicht und die dritte Schicht Wärme von etwa 90°C für mindestens 3 Stunden ausgesetzt wird, und wobei sich die erste Schicht, die zweite Schicht und die dritte Schicht auf einen Abstand von weniger als etwa 0,84 mm (0,033 Zoll) verziehen.

7. Einrichtung nach Anspruch 1, **dadurch gekennzeichnet, dass** eine Dicke der zweiten Schicht zwischen etwa 0,13 mm (0,005 Zoll) und etwa 0,39 mm (0,015 Zoll) liegt.

8. Einrichtung nach Anspruch 1, **dadurch gekennzeichnet, dass** eine Dicke der zweiten Schicht etwa 0,25 mm (0,010 Zoll) beträgt.

9. Einrichtung nach Anspruch 1, **dadurch gekennzeichnet, dass** die Dicke der ersten Schicht, der zweiten Schicht und der dritten Schicht zusammen zwischen etwa 0,45 mm (0,018 Zoll) und etwa 0,53 mm (0,021 Zoll) beträgt.

10. Einrichtung nach Anspruch 1, **dadurch gekennzeichnet, dass** die erste Schicht eine innere Oberfläche, die der ersten Oberfläche der zweiten Schicht benachbart ist, und eine äußere Oberfläche umfasst, und wobei die dritte Schicht eine innere Oberfläche, die der zweiten Oberfläche der zweiten Schicht benachbart ist, und eine äußere Oberfläche umfasst, wobei die Einrichtung weiterhin Folgendes umfasst:
eine erste äußere Schicht (220, 332), die sich bei der äußeren Oberfläche der ersten Schicht befindet; und
eine zweite äußere Schicht (222, 336), die sich bei der äußeren Oberfläche der dritten Schicht befindet.

11. Einrichtung nach Anspruch 10, **dadurch gekennzeichnet, dass** die Dicke der ersten Schicht, der zweiten Schicht, der dritten Schicht, der ersten äußeren Schicht und der zweiten äußeren Schicht zusammen zwischen etwa 0,68 mm und 0,84 mm beträgt.

12. Einrichtung nach Anspruch 10, **dadurch gekennzeichnet, dass** mindestens eine der ersten und zweiten äußeren Schicht mindestens eines von Polyvinylchlorid und Polyethylenterephthalat umfasst.

13. Einrichtung nach Anspruch 10, **dadurch gekennzeichnet, dass** mindestens eine der ersten und zweiten äußeren Schicht Polycarbonat umfasst.

14. Einrichtung nach Anspruch 1, weiterhin umfassend eine Antenne und einen Chip (216, 360) zum Kommunizieren mit einer RFID-Einrichtung.

15. Einrichtung nach Anspruch 14, **dadurch gekennzeichnet, dass** der Chip und die Antenne Kommunikationen bei einer Frequenz von etwa 125 kHz ermöglichen.

16. Einrichtung nach Anspruch 1, **dadurch gekennzeichnet, dass** die zweite Schicht mehrere Schichten umfasst, von denen mindestens ein Abschnitt Polycarbonat umfasst.

17. Verfahren zum Herstellen eines Prelam von mindestens einer datentragenden Einrichtung (200, 300), wobei das Verfahren **gekennzeichnet ist durch**:
a) Platzieren einer ersten Schicht (208, 316), die Polyvinylchlorid umfasst, an einer ersten Seite einer zweiten Schicht (212, 308), die Polycarbonat umfasst; und
b) Platzieren einer dritten Schicht (210, 320), die Polyvinylchlorid umfasst, an einer zweiten Seite der zweiten Schicht.

18. Verfahren nach Anspruch 17, weiterhin **dadurch gekennzeichnet, dass** man :
c) mindestens die erste, zweite und dritte Schicht einem vorbestimmten Druck und einer vorbestimmten Temperatur für einen vorbestimmten Zeitraum unterzieht.

19. Verfahren nach Anspruch 17, weiterhin **gekennzeichnet durch**, vor Schritt a):
c) Ausschneiden mindestens eines Abschnitts der zweiten Schicht, um eine Antenne und/oder einen Chip (216, 360) aufzunehmen;
d) Platzieren der einen Antenne und/oder des einen Chips in den ausgeschnittenen Abschnitt der zweiten Schicht und
e) Bedecken der einen Antenne und/oder des einen Chips mit mindestens einer der ersten und dritten Schicht.

20. Verfahren nach Anspruch 17, **dadurch gekennzeichnet, dass** die zweite Schicht eine Dicke zwischen etwa 0,13 mm (0,005 Zoll) und etwa 0,39 mm (0,015 Zoll) beträt.

21. Verfahren nach Anspruch 17, **dadurch gekennzeichnet, dass** eine Dicke der zweiten Schicht etwa 0,25 mm (0,010 Zoll) beträgt.

22. Verfahren nach Anspruch 17, weiterhin **gekennzeichnet durch**:
c) Platzieren einer ersten äußeren Schicht (220, 332) bei der ersten Schicht;
d) Platzieren einer zweiten äußeren Schicht (222, 336) bei der dritten Schicht und
e) Vereinigen der ersten, zweiten, dritten, ersten äußeren und zweiten äußeren Schicht miteinander, indem sie Wärme für eine vorbestimmte Zeitdauer ausgesetzt werden.

23. Verfahren nach Anspruch 22, **dadurch gekennzeichnet, dass** die erste und zweite äußere Schicht Polycarbonat umfassen.

## Revendications

1. Dispositif porteur de données stratifié (200, 300) comprenant :
un préstratifié comprenant une première couche (208, 316), une deuxième couche (212, 308) et une troisième couche (210, 320) ;
**caractérisé en ce que** la deuxième couche comprend du polycarbonate et comporte une première surface (214a, 312a) et une deuxième surface (214b, 312b) ;
la première couche comprend du polychlorure de vinyle et est adjacente à la première surface de la deuxième couche ; et
la troisième couche comprend du polychlorure de vinyle et est adjacente à la deuxième surface de la deuxième couche de telle sorte que la deuxième couche est disposée entre les première et troisième couches.

2. Dispositif selon la revendication 1, **caractérisé en ce que** des composants électroniques (216) sont incorporés au moins dans la deuxième couche.

3. Dispositif selon la revendication 1, **caractérisé en ce que** des composants électriques sont incorporés dans les première, deuxième et troisième couches.

4. Dispositif selon la revendication 2, **caractérisé en ce que** la deuxième couche est découpée à l'emporte-pièce pour recevoir une antenne et/ou une puce.

5. Dispositif selon la revendication 1, **caractérisé en ce qu'**au moins la première couche, la deuxième couche et la troisième couche sont soumises à de la chaleur, et dans lequel la deuxième couche dissipe sensiblement la chaleur de telle sorte qu'une différence de température de moins d'environ 5 degrés Celsius est obtenue entre la deuxième couche et les première et troisième couches adjacentes.

6. Dispositif selon la revendication 5, **caractérisé en ce qu'**au moins la première couche, la deuxième couche et la troisième couche sont soumises à une température d'environ 90 degrés Celsius pendant au moins 3 heures, et dans lequel la première couche, la deuxième couche et la troisième couche gauchissent sur une distance inférieure à environ 0,84 mm (0,033 pouce).

7. Dispositif selon la revendication 1, **caractérisé en ce que** l'épaisseur de la deuxième couche est comprise entre environ 0,13 mm (0,005 pouce) et environ 0,39 mm (0,015 pouce).

8. Dispositif selon la revendication 1, **caractérisé en ce que** l'épaisseur de la deuxième couche est d'environ 0,25 mm (0,010 pouce).

9. Dispositif selon la revendication 1, **caractérisé en ce que** l'épaisseur de la première couche, la deuxième couche et la troisième couche est collectivement comprise entre environ 0,45 mm (0,018 pouce) et environ 0,53 mm (0,021 pouce).

10. Dispositif selon la revendication 1, **caractérisé en ce que** la première couche comprend une surface interne qui est adjacente à la première surface de la deuxième couche et une surface externe, et dans lequel la troisième couche comprend une surface interne qui est adjacente à la deuxième surface de la deuxième couche et une surface externe, le dispositif comprenant en outre :
une première surface externe (220, 332) située à proximité de la surface externe de la première couche ; et
une deuxième surface externe (222, 336) située à proximité de la surface externe de la troisième couche.

11. Dispositif selon la revendication 10, **caractérisé en ce que** l'épaisseur de la première couche, la deuxième couche, la troisième couche, la première couche externe et la deuxième couche externe est collectivement comprise entre environ 0,68 mm et environ 0,84 mm.

12. Dispositif selon la revendication 10, **caractérisé en ce que** la première et/ou la deuxième couche externe comprennent du polychlorure de vinyle et/ou du téréphtalate de polyéthylène.

13. Dispositif selon la revendication 10, **caractérisé en ce que** la première et/ou la deuxième couche externe comprennent du polycarbonate.

14. Dispositif selon la revendication 1, comprenant en outre une antenne et une puce (216, 360) pour communiquer avec un dispositif d'identification par radiofréquence (RFID).

15. Dispositif selon la revendication 14, **caractérisé en ce que** la puce et l'antenne permettent des communications à une fréquence d'environ 125 kHz.

16. Dispositif selon la revendication 1, **caractérisé en ce que** la deuxième couche comprend de multiples couches, dont au moins une partie comprend du polycarbonate.

17. Procédé de fabrication d'un préstratifié d'au moins un dispositif porteur de données (200, 300), le procédé étant **caractérisé par** :
a) le positionnement d'une première couche (208, 316) comprenant du polychlorure de vinyle à côté d'un premier côté d'une deuxième couche (212, 308) comprenant du polycarbonate ; et
b) le positionnement d'une troisième couche (210, 320) comprenant du polychlorure de vinyle à côté d'un deuxième côté de la deuxième couche.

18. Procédé selon la revendication 17, **caractérisé en outre par** :
c) la soumission au moins des première, deuxième et troisième couches à une pression et une température prédéterminées pendant un temps prédéterminé.

19. Procédé selon la revendication 17, **caractérisé en** outre, avant l'étape a), par :
c) la découpe d'au moins une partie de la deuxième couche pour loger une antenne et/ou une puce (216, 360) ;
d) le positionnement d'une antenne et/ou d'une puce dans la partie découpée de la deuxième couche ; et
e) le recouvrement de l'antenne et/ou de la puce avec la première et/ou la troisième couche.

20. Procédé selon la revendication 17, **caractérisé en ce que** la deuxième couche a une épaisseur comprise entre environ 0,13 mm (0,005 pouce) et environ 0,39 mm (0,015 pouce).

21. Procédé selon la revendication 17, **caractérisé en ce que** l'épaisseur de la deuxième couche est d'environ 0,25 mm (0,010 pouce).

22. Procédé selon la revendication 17, **caractérisé en outre par** :
c) le positionnement d'une première couche externe (220, 332) à proximité de la première couche ;
d) le positionnement d'une deuxième couche externe (222, 336) à proximité de la troisième couche ; et
e) l'assemblage de la première couche, la deuxième couche, la troisième couche, la première couche externe et la deuxième couche externe en les soumettant à de la chaleur pendant un temps prédéterminé.

23. Procédé selon la revendication 22, **caractérisé en ce que** les première et deuxième couches externes comprennent du polycarbonate.
